# EUROPEAN PATENT APPLICATION

(11) **EP 1 603 298 A1**
(43) Date of publication of application: **07.12.2005**
(21) Application number: 05011743.1
(22) Date of filing: 31.05.2005
(51) Int. Cl.: H04L 29/06, H04L 12/56

(54) **Wireless communication method and apparatus for transmitting or receiving real time data**

(30) Priority: 04.06.2004 JP 2004167224
(71) Applicant: ALPS ELECTRIC CO., LTD., Tokyo 145-8501 (JP)
(72) Inventor: Kim, Talguk, Otsuka-cho Ota-ku Tokyo 145-8501 (JP)
(74) Representative: Klunker . Schmitt-Nilson . Hirsch

(57) **Abstract**

A receiving Bluetooth module has a buffer for sequentially storing packets received from a Bluetooth module of an audio sever. After a predetermined number of received packets is stored in the buffer, the received packets are sequentially read out from the butter while subsequently received packets are being storing in the buffer. Then, the read packets are decoded to perform the reproduction of the real-time data. In this way, a voice is output from a headphone. When the number of packets in the buffer is zero, the reproduction of the real-time data is stopped, and then subsequently received packets are discarded. In addition, the intensity of received radio waves is monitored, and the operation of storing the received data packets in the buffer is resumed when the intensity of the radio waves exceeds a predetermined level at a predetermined time.

## Description

### BACKGROUND OF THE INVENTION

### 1. Field of the Invention

The present invention relates to a wireless communication method and a wireless communication apparatus using a Bluetooth module, and more particularly, to a wireless communication method and a wireless communication apparatus suitable for transmitting/receiving real-time data, such as audio signals (hereinafter, simply referred to as audio signals or music).

### 2. Description of the Related Art

In general, a Bluetooth module includes an RF transceiver IC and a base-band IC. In the Bluetooth module, when an audio signal is received by the transceiver, the base-band IC processes the received audio signal to output it to a decoder IC provided at the outside.

In the communication between two Bluetooth modules, a transmitting module transmits an audio signal as real-time data, and a receiving module receives the data and reproduces it in real time. In this case, when the quality of a wireless communication channel is deteriorated, or when a distance between the modules temporally exceeds a predetermined range, the audio signal is not reproduced by the receiving module without interruption until the level of the wireless signal received by the receiving module is restored to a predetermined level, which results in the remarkable deterioration of the quality thereof.

That is, when the Bluetooth module has a buffer capable of storing N audio data packets, which is called a jitter buffer used for receiving audio signals on a receiver side, and the received packets are temporally stored in the buffer. In addition, the received packets to the number of n (0 ≤ n ≤ N) are stored in the buffer at the beginning, and the packets are read out from the buffer at a point of time when the n packets stored at the beginning exceed a predetermined value Th1 (n ≥ Th1). Then, the decoded packets are sequentially reproduced.

When data communication is normally performed between the modules, the received packets are sequentially stored in the buffer, or the previously stored packets are read out to be reproduced. Therefore, the number of packets stored in the buffer does not vary greatly, and thus it is possible to smoothly reduce the audio signals. In addition, as well known, a counter for managing the number of packets stored in the buffer performs a count-up operation when packets are stored in the buffer, and performs a count-down operation when packets are read out from the buffer.

During the above-mentioned operation, when the quality of a wireless communication channel is deteriorated due to interference waves, or when a distance between modules temporally exceeds a predetermined range, transmitted packets do not reach a receiving module within a desired time. In this case, the packets are not stored in the buffer, and the count-up operation is not performed. However, the packets are read from the buffer to a decoder, and the counter performs the count-down operation, so that the number of packets in the buffer is reduced. When the value of the counter is zero, that is, when no packet is stored in the buffer, the interruption of the reduced sound occurs, resulting in the remarkable deterioration of the quality thereof.

Further, in the above-mentioned communication state, since packets are irregularly transmitted to the receiving module, sound is unstably reproduced, which causes a music listener to feel unpleasant.

In the related art, one known technique for exchanging an audio signal as packet data is described in, for example, Japanese Unexamined Patent Application Publication No. 2000-134370, and one known Bluetooth module is shown in, for example, Kazuhiro Miyazu, "Bluetooth Guidebook", published by THE NIKKAN KOGYO SHIMBUN, LTD., on September 20, 2000, pp. 68-78, which are incorporated herein by reference.

As described above, the wireless communication method using the Bluetooth module according to the related art has the following problem: in the transmission/reception of real-time data, such as an audio signal, when the quality of a wireless communication channel is deteriorated due to interference waves, or when a distance between modules temporally exceeds a predetermined range, the interruption of the reduced sound occurs, resulting in the remarkable deterioration of the quality thereof, so that sound is unstably reproduced, which causes a music listener to feel unpleasant.

### SUMMARY OF THE INVENTION

An advantage of the invention is that it provides a wireless communication method and a wireless communication apparatus capable of reproducing packets of received audio data without making a user unpleasant even if the quality of a wireless communication channel is deteriorated due to interference waves, or a distance between modules temporally exceeds a predetermined range when real-time data, such as an audio signal, is transmitted/received using Bluetooth modules.

According to an aspect of the invention, a wireless communication method transmits or receives real-time data, such as audio signals, among a plurality of communication apparatuses connected to each other by wireless, and a receiving communication apparatus of the plurality of communication apparatuses has a buffer that sequentially stores packets of the received real-time data. The wireless communication method includes the following steps: after a predetermined number of received packets is stored in the buffer, sequentially reading out the received packets from the butter while storing subsequently received packets in the buffer; decoding the read packets to reproduce the real-time data; stopping reproducing the real-time data when the number of packets in the buffer is zero, and then discarding subsequently received packets; monitoring the intensity of received radio waves; and resuming storing the received data packets in the buffer when the intensity of the radio waves exceeds a predetermined level at a predetermined time.

Further, in this case, preferably, when a processing program starting at predetermine intervals sequentially detects a predetermined number of times that the intensity of the received radio waves exceeds the predetermined level, it is determined that the intensity of the received radio wave exceeds the predetermined level at a predetermined time.

Furthermore, it is preferable that the communication apparatuses be Bluetooth modules.

Moreover, according to another aspect of the invention, a wireless communication system includes a plurality of communication apparatuses that are connected to each other by wireless to transmit/receive real-time data, such as audio signals. In this system, a receiving wireless communication apparatus of the plurality of wireless communication apparatuses includes a buffer that sequentially stores packets of the received real-time data; a unit that, after a predetermined number of received packets is stored in the buffer, sequentially reads out the received packets from the butter while storing subsequently received packets in the buffer, and that decodes the read packets to reproduce the real-time data; a unit that stops reproducing the real-time data when the number of packets in the buffer is zero, that discards subsequently received packets, and that monitors the intensity of received radio waves; and a unit that resumes storing the received data packets in the buffer when the intensity of the radio waves exceeds a predetermined level at a predetermined time.

Further, in this structure, preferably, when a processing program starting at predetermine intervals sequentially detects a predetermined number of times that the intensity of the received radio waves exceeds the predetermined level, it is determined that the intensity of the received radio waves exceeds the predetermined level at a predetermined time.

Furthermore, it is preferable that the wireless communication apparatuses be Bluetooth modules.

### BRIEF DESCRIPTION OF THE DRAWINGS

Fig. 1 is an explanatory diagram illustrating an example of the state of use of a wireless communication method according to a first embodiment of the invention;
Fig. 2 is a flow chart illustrating an audio signal receiving operation in a Bluetooth module;
Fig. 3 is a flow chart illustrating a process of monitoring the intensity of wireless signals received when a reproducing operation is stopped and of determining a point of time when the process shown in Fig. 2 is resumed; and
Fig. 4 is an explanatory diagram illustrating the transition state of the audio signals reproduced in the Bluetooth module.

### DESCRIPTION OF THE PREFERRED EMBODIMENT

Hereinafter, preferred embodiments of a wireless communication method and a wireless communication apparatus using a Bluetooth module according to the invention will be described in detail with reference to the accompanying drawings.

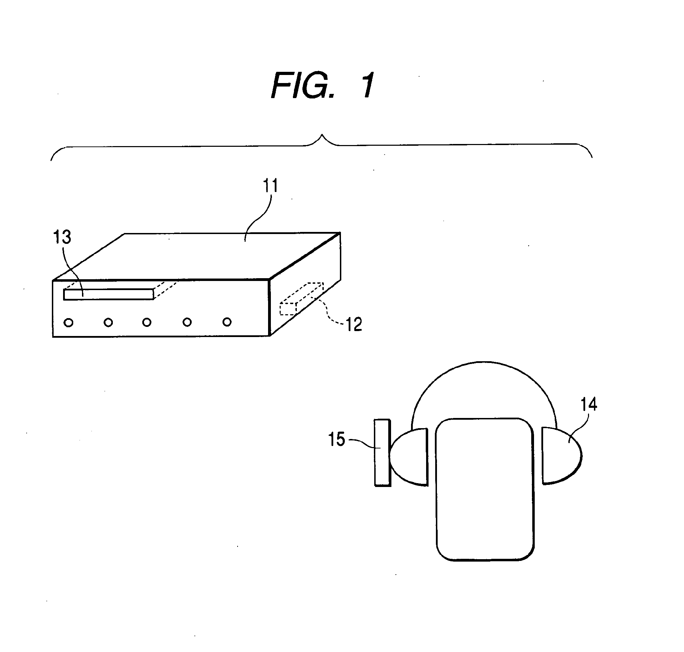

Fig. 1 is an explanatory diagram illustrating an example of the state of use of a wireless communication method according to an embodiment of the invention. In Fig. 1, reference numeral 11 denotes an audio server, and reference numerals 12 and 15 denote Bluetooth modules. In addition, reference numeral 13 denotes a CD player, and reference numeral 14 denotes a headphone.

According to the wireless communication method according to an embodiment of the invention shown in Fig. 1, when the audio server 11 having an audio reproducing device, such as the CD player 13, and the Bluetooth module 12 is provided in a living room, a user listens to, for example, music transmitted from the audio server 11 using the headphone 14 equipped with the Bluetooth module 15.

In the audio server 11, the Bluetooth module 12 provided therein receives audio signals reproduced by the CD player 13 and then transmits them as wireless signals. The headphone 14 used by the user is provided with the Bluetooth module 15 for receiving and reproducing the wireless signals transmitted from the Bluetooth module 12 of the audio server 11, and audio signals reproduced by the Bluetooth module 15 are output from the headphone 14 as sound.

In the above-mentioned usage environment of the wireless communication method according to the embodiment of the invention, the user can listen to music transmitted from the audio server 11 while moving in a room in which the audio server 11 is provided or at the outside of the room, in the range in which the wireless signals transmitted from the Bluetooth module 12 of the audio server 11 can reach.

In the above-mentioned environment, in a case in which the user listens to music, when the quality of a wireless communication channel is deteriorated by interference waves, or when the user moves to the outside of the room so that a distance between the Bluetooth modules temporally exceeds the wireless communication range, the intensity of radio waves is lowered. In this case, in the related art, sound is not reproduced without interruption, and thus the quality of music to be reproduced is deteriorated, resulting in unstable sound reproduction, which causes the music listener to feel unpleasant. Thus, it is an object of the invention to get rid of the unpleasant feeling of the user in music listening.

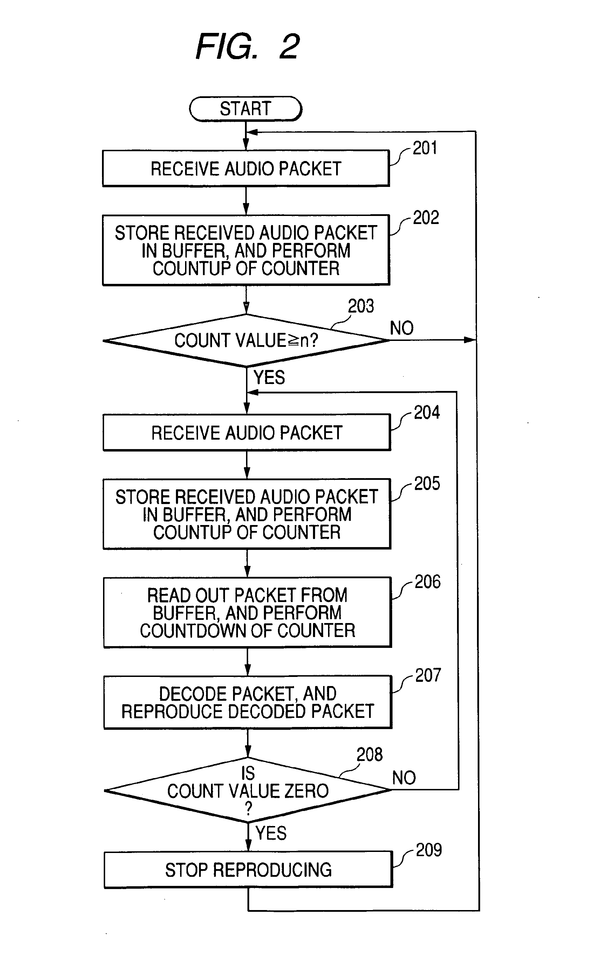

Fig. 2 is a flow chart illustrating a receiving operation of audio signals in the Bluetooth module 15. The receiving operation will be described below in detail. The following process is performed by allowing a CPU to execute software stored in a memory that is provided in the Bluetooth module.
(1) When the audio server 11 transmits wireless signals, the Bluetooth module 15 receives audio packets of the wireless signals (step 201), and then stores the received audio packets in a buffer provided in a receiving module. Then, a count-up operation in which the value of a counter for managing the number of packets in the buffer increases by one is performed (step 202).
(2) Since steps 201 and 202 are performed whenever the audio packets are received, the value of the counter increases when the packets are received. Then, it is determined that the value of the counter reaches a predetermined value n. As a result, when the value of the counter is not equal to the value n, the process returns to step 201 to continue to receive the audio packets (step 203).
(3) When the value of the counter is equal to the predetermined value n, the subsequent audio packets are received (step 204). Then, the received audio packets are stored in the buffer, and then the count-up operation of the counter is performed (step 205). In addition, the packets are read out from the buffer, and a count-down operation is performed (step 206). Subsequently, the read packets are decoded to be reproduced (step 207).
(4) In steps 204 to 207, during the reproduction of the received audio signals, the value of the counter for managing the number of packets in the buffer is monitored. When the value is not zero, but is larger than zero, steps 204 to 207 are repeatedly performed to continue to reproduce, for example, music (step 208).
(5) When the value of the counter is zero in step 208, the quality of a wireless communication channel is deteriorated due to interference waves, or the intensity of radio waves is lowered due to the movement of the user to the outside of a room, which causes the reception of audio packets to be interrupted, resulting in the deterioration of reproduction. As a result, the reproduction of the audio packets is stopped. Then, the software for executing the above-mentioned process allows a decoder to perform a mute mode, so that no sound is output from the headphone 14 (step 209).

When a predetermined condition required for normal music reproduction is satisfied after the reproduction is stopped by the above-mentioned process, the process may be resumed from step 201. In this embodiment of the invention, when the intensity RSSI of the received wireless signals is maintained more than a predetermined time at a predetermined level, predetermined conditions in which the normal music reproduction can be performed and the above-mentioned process is resumed are satisfied.

Even if the above-mentioned reproducing operation is stopped, the audio packets are received and then stored in the buffer. However, in this case, since the audio packets are received in a state in which the quality of the wireless communication channel is deteriorated, the received audio packets are discarded as unnecessary packets.

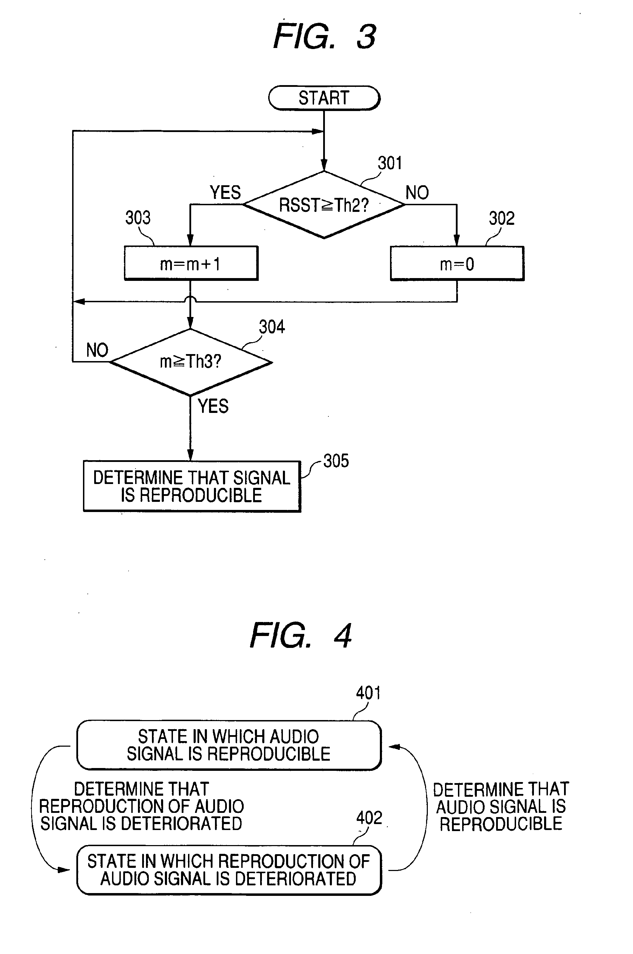

Fig. 3 is a flow chart illustrating a process of determining a point of time when the intensity of wireless signals received in a state in which the reproducing operation is stopped is monitored to resume the process shown in Fig. 2. The determining process will be described below with reference to Fig. 2. When step 209 is started in the flow chart shown in Fig. 2, this process is started, and is repeatedly performed at predetermined intervals until the process shown in Fig. 2 is resumed.
(1) When this process is started, it is determined whether the intensity RSSI of the wireless signals being received is higher than a predetermined level Th2, that is, whether RSSI ≥ Th2 is satisfied (step 301). As a result, when RSSI ≥ Th2 is not satisfied, a value m of the counter for counting how many times the determination is performed is reset to zero. Then, the process returns to step 301, and the determining process of the intensity RSSI of the wireless signal is repeatedly performed (step 302).
(2) When RSSI ≥ Th2 is satisfied in step 301, a number 1 is added to the value m of the counter, that is, m = m + 1 (step 303). Then, it is determined whether the value m is larger than a predetermined value Th3, that is, whether m ≥ Th3 is satisfied. As a result, when m ≥ Th3 is not satisfied, the process returns to step 301, and then the determining process of the intensity RSSI of the wireless signal is repeatedly performed (step 304).
(3) When m ≥ Th3 is satisfied in step 304, the conditions in which the intensity RSSI of the received wireless signal is maintained more than a predetermined time at a predetermined level and the process shown in Fig. 2 is resumed are satisfied. Therefore, it is determined that normal music reproduction can be performed, and thus the process shown in Fig. 2 is resumed (step 305).

Fig. 4 is a diagram illustrating the transition state of the audio signals reproduced in the Bluetooth module 15, and the transition state will be described below in detail.

As shown in Fig. 4, the reproduction state of the audio signal includes a state 401 in which the audio signal is reproducible and a state 402 in which the reproduction of the audio signal is deteriorated. In the state 402 in which the audio signal is reproducible, in the flow chart shown in Fig. 2, the value of the counter for managing the number of packets in the buffer is not zero, and then steps 204 and 207 are repeatedly performed. Then, the received packets in the buffer are decoded to be reproduced. Therefore, in this state, when no received packet is stored in the buffer, causing the value of the counter to be zero, it is determined that the reproduction of the audio signal is deteriorated. Thus, the state 401 is changed to the state 402 in which the reproduction of the audio signal is deteriorated. In the state 402 in which the reproduction of the audio signal is deteriorated, the process shown in Fig. 3 is repeatedly performed. When it is detected in step 305 that the intensity RSSI of the received wireless signal is maintained more than a predetermined time at a predetermined level, it is determined that normal music reproduction can be performed, and thus the state 402 is changed to the state 401 in which the audio signal is reproducible.

In this embodiment of the invention, in the state 402 in which the reproduction of the audio signal is deteriorated, and after the state 402 in which the reproduction of the audio signal is deteriorated is changed to the state 401 in which the audio signal is reproducible, a mute mode in which no sound is reproduced is maintained until the value of the counter for counting the number of packets stored in the buffer reaches zero in step 203 after steps 201 and 201 shown in Fig. 2 are continuously performed, and then the packets in the buffer are decoded.

According to this embodiment of the invention, in the transmission or reception of real-time data, such as an audio signal, when the quality of a wireless communication channel is deteriorated due to interference waves, or when a distance between modules temporally exceeds a predetermined range, a mute mode in which the sound to be reproduced is muted is performed. Therefore, the interruption or distortion of sound caused by the deteriorated signals does not occur, that is, stable reproduction is preformed. Thus, it is possible to reproduce packets of the received audio data without making a user feel unpleasant.

As described above, according to the invention, it is possible to reproduce packets of received audio data without making a user unpleasant even if the quality of a wireless communication channel is deteriorated due to interference waves, or a distance between modules temporally exceeds a predetermined range when real-time data, such as an audio signal, is transmitted/received using Bluetooth modules.

## Claims

1. A wireless communication method that transmits or receives real-time data, such as audio signals, among a plurality of communication apparatuses connected to each other by wireless, a receiving communication apparatus of the plurality of communication apparatuses having a buffer that sequentially stores packets of the received real-time data, the method comprising:
after a predetermined number of received packets is stored in the buffer, sequentially reading out the received packets from the butter while storing subsequently received packets in the buffer;
decoding the read packets to reproduce the real-time data;
stopping reproducing the real-time data when the number of packets in the buffer is zero, and then discarding subsequently received packets;
monitoring the intensity of received radio waves; and
resuming storing the received data packets in the buffer when the intensity of the radio waves exceeds a predetermined level at a predetermined time.

2. The wireless communication method according to claim 1,
wherein, when a processing program starting at predetermine intervals sequentially detects a predetermined number of times that the intensity of the received radio waves exceeds a predetermined level, it is determined that the intensity of the received radio wave exceeds the predetermined level at a predetermined time.

3. The wireless communication method according to claim 1 or 2,
wherein the communication apparatuses are Bluetooth modules.

4. A wireless communication system comprising a plurality of communication apparatuses that are connected to each other by wireless to transmit/receive real-time data, such as audio signals,
wherein a receiving wireless communication apparatus of the plurality of wireless communication apparatuses includes:
a buffer that sequentially stores packets of the received real-time data;
a unit that, after a predetermined number of received packets is stored in the buffer, sequentially reads out the received packets from the butter while storing subsequently received packets in the buffer, and that decodes the read packets to reproduce the real-time data;
a unit that stops reproducing the real-time data when the number of packets in the buffer is zero, that discards subsequently received packets, and that monitors the intensity of received radio waves; and
a unit that resumes storing the received data packets in the buffer when the intensity of the radio waves exceeds a predetermined level at a predetermined time.

5. The wireless communication system according to claim 4,
wherein, when a processing program starting at predetermine intervals sequentially detects a predetermined number of times that the intensity of the received radio waves exceeds a predetermined level, it is determined that the intensity of the received radio waves exceeds the predetermined level at a predetermined time.

6. The wireless communication system according to claim 4 or 5,
wherein the wireless communication apparatuses are Bluetooth modules.
